# EUROPEAN PATENT APPLICATION

(11) **EP 4 681 975 A1**
(43) Date of publication of application: **21.01.2026**
(21) Application number: 25189841.7
(22) Date of filing: 16.07.2025
(51) Int. Cl.: B60L 50/60, B60K 1/04

(54) **ELECTRIC VEHICLE**

(30) Priority: 18.07.2024 JP 2024114859
(71) Applicant: TOYOTA JIDOSHA KABUSHIKI KAISHA, Toyota-shi, Aichi-ken 471-8571 (JP)
(72) Inventor: IWASAKI, Nanae, TOYOTA-SHI, AICHI-KEN, 471-8571 (JP)
(74) Representative: Cabinet Beau de Loménie

(57) **Abstract**

An electric vehicle (10) includes a first-row seat (17) and a second-row seat (18) that are arranged on a floor (16). The second-row seat (18) is located rearward of the first-row seat (17). In the electric vehicle, the first-row seat includes two seats (17A, 17B) that are laterally arranged side by side. In the electric vehicle, a center tunnel (30) is arranged between the two seats (17A, 17B). The center tunnel (30) is located below the floor (16) and above the battery (15). A vehicle on-board charger (20), a battery ECU (21), and a junction box (22), which are battery-related devices, are located inside the center tunnel (30).

## Description

### BACKGROUND

### 1. Field

The present disclosure relates to an electric vehicle.

### 2. Description of Related Art

Japanese Laid-Open Patent Publication No. 2018-158688 discloses an electric vehicle in which a battery is arranged below the floor of the passenger compartment.

Japanese Laid-Open Patent Publication No. 2018-158688 does not disclose, as part of the vehicle lower structure, a configuration related to battery-related devices that charge the battery or distribute electric power supplied from the battery. In an electric vehicle in which a battery is arranged below the floor, there is room for improvement in the arrangement of battery-related devices.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An electric vehicle according to an aspect of the present disclosure drives a drive wheel using electric power stored in a battery. The electric vehicle includes a first motor and a second motor that serve as a power source for driving the drive wheel, a battery that stores electric power supplied to the first motor and the second motor, battery-related devices, a first integrated electromechanical unit including the first motor and a first electric power controller that supplies power to the first motor, and a second integrated electromechanical unit including the second motor and a second electric power controller that supplies power to the second motor. The battery is located below the floor and between the front wheel and the rear wheel. The first integrated electromechanical unit is located frontward of the battery. The second integrated electromechanical unit is located rearward of the battery. A first-row seat and a second-row seat are arranged on the floor. The second-row seat is located rearward of the first-row seat. The first-row seat includes two seats that are laterally arranged side by side. A center tunnel is arranged between the two seats. The center tunnel is located below the floor and above the battery. The center tunnel extends from a front portion to a rear portion of the floor. Each of the battery-related devices is located inside the center tunnel.

Other features and aspects will be apparent from the following detailed description, the drawings, and the claims.

### BRIEF DESCRIPTION OF THE DRAWINGS

Fig. 1 is a schematic diagram illustrating the configuration of the electric system and the drive system in an electric vehicle according to an embodiment.
Fig. 2 is a schematic diagram illustrating the shift lever of a manual gear shift simulator in the electric vehicle, in which the configuration of the electric system and drive system shown in Fig. 1 is employed.
Fig. 3 is a diagram illustrating the torque characteristics for each shift position selected by the shift lever of the manual gear shift simulator shown in Fig. 2.
Fig. 4 is a schematic diagram illustrating the arrangement of the devices in the electric vehicle in which the configuration of the electric system and the drive system from Fig. 1 is employed.
Fig. 5 is a cross-sectional view of the electric vehicle taken along line 5-5 in Fig. 4.
Fig. 6 is a cross-sectional view of the electric vehicle taken along line 6-6 in Fig. 4.
Fig. 7 is a cross-sectional view of the electric vehicle taken along the line 7-7 in Fig. 4.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

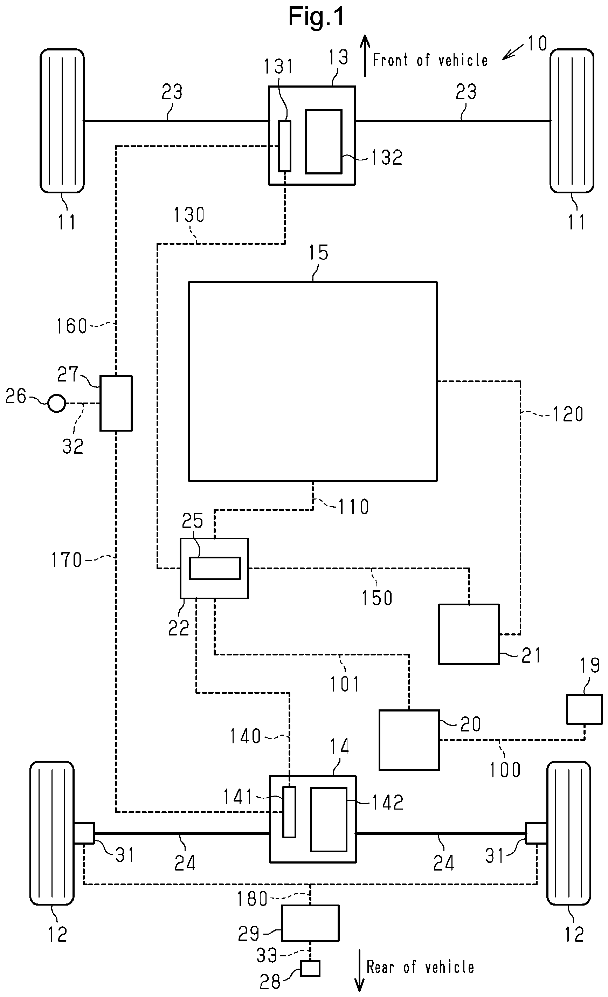

An electric vehicle 10 according to an embodiment will now be described with reference to Figs. 1 to 7. In the following description, terms indicating directionality, such as "front," "rear," "left," "right," "upper," and "lower" refer to directions as seen by an occupant in a state in which the electric vehicle 10 is oriented forward. The left-right direction coincides with the width direction of the electric vehicle 10.

### Devices in Electric Vehicle 10

As shown in Fig. 1, the electric vehicle 10 includes front wheels 11, rear wheels 12, a first integrated electromechanical unit 13, a second integrated electromechanical unit 14, a battery 15, a first drive shaft 23, a second drive shaft 24, and a charging port 19. The first integrated electromechanical unit 13 includes a first electric power controller 131, a first motor 132, and a power transmission mechanism (not shown). The second integrated electromechanical unit 14 includes a second electric power controller 141, a second motor 142, and a power transmission mechanism (not shown). Further, the electric vehicle 10 includes, as battery-related devices, a vehicle on-board charger 20, a battery electronic control unit (ECU) 21, and a junction box 22. The junction box 22 includes a cutoff relay 25. An ECU includes a central processing unit (CPU) and a memory that stores control programs and data. The ECU executes various control processes by instructing the CPU to execute programs stored in the memory.

### Electric System of Electric Vehicle 10

The broken lines shown in Fig. 1 indicate wire harnesses. The charging port 19 and the vehicle on-board charger 20 are electrically connected to each other by a wire harness 100. The junction box 22 and the battery 15 are electrically connected to each other by a wire harness 110. The battery ECU 21 and the battery 15 are electrically connected to each other by a wire harness 120. The junction box 22 and the first electric power controller 131 are electrically connected to each other by a wire harness 130. The junction box 22 and the second electric power controller 141 are electrically connected to each other by a wire harness 140. The junction box 22 and the vehicle on-board charger 20 are electrically connected to each other by a wire harness 101. The junction box 22 and the battery ECU 21 are electrically connected to each other by a wire harness 150.

A shift lever 26 and a shift ECU 27 are electrically connected to each other by a wire harness 32. The shift ECU 27 and the first electric power controller 131 are electrically connected to each other by a wire harness 160. The shift ECU 27 and the second electric power controller 141 are electrically connected to each other by a wire harness 170. A hand brake lever 28 and a switch ECU 29 are electrically connected to each other by a wire harness 33. The switch ECU 29 and an electric parking brake 31 are electrically connected to each other by a wire harness 180.

### Battery-Related Devices in Electric Vehicle 10

The vehicle on-board charger 20, which is a battery-related device, charges the battery 15 with electric power from an external charging device located outside the electric vehicle 10. The vehicle on-board charger 20 receives AC power from an AC power supply, which is connected to the charging port 19, via the wire harness 100. A charging plug of the external charging device is inserted into the charging port 19. The charging port 19 and the vehicle on-board charger 20 are used for standard charging, which is performed using an AC power supply (e.g., 100 V or 200 V). The vehicle on-board charger 20 converts the received AC power into DC power. The vehicle on-board charger 20 inputs the DC power converted by the vehicle on-board charger 20 to the battery 15 through the wire harness 101, the junction box 22, and the wire harness 110. Thus, the battery 15 is charged by the external charging device.

The battery ECU 21, which is a battery-related device, controls charging and discharging of the battery 15. The battery ECU 21 acquires information such as the input current, output current, voltage, and temperature of the battery 15 via the wire harness 120, which connects the battery ECU 21 to the battery 15. Based on the acquired information, the battery ECU 21 estimates a capacity CH of the battery 15, a full charge capacity CHmax of the battery 15, a state of charge SOC of the battery 15, and a state of health SOH of the battery 15. The capacity CH of the battery 15 is the amount of electric power stored in the battery 15 at the point in time when the battery ECU 21 acquired the information. The full charge capacity CHmax of the battery 15 is the maximum amount of electric power that the battery 15 can store at the point in time when the battery ECU 21 acquired the information. The state of charge SOC of the battery 15 is the value obtained by dividing the full charge capacity CHmax by the capacity CH. The state of health SOH of the battery 15 is an index of how much the full charge capacity CHmax of the battery 15 at the point in time when the battery ECU 21 acquired the information has decreased, compared to the full charge capacity CHmax of battery 15 at the time of factory shipment. The battery ECU 21 controls the charging and discharging of the battery 15 based on the capacity CH of the battery 15, the full charge capacity CHmax, the state of charge SOC, and the state of health SOH.

The junction box 22, which is a battery-related device, distributes the DC power supplied from the battery 15 to multiple devices. The junction box 22 supplies, to the first electric power controller 131, a high-voltage DC power output from the battery 15 via the wire harness 130. The junction box 22 supplies, to the second electric power controller 141, a high-voltage DC power output from the battery 15 via the wire harness 140. The junction box 22 includes a DC-to-DC converter that steps down the voltage of the DC power supplied from the battery 15 via the wire harness 110. The junction box 22 supplies the DC power, which has been stepped down by the DC-to-DC converter, to the battery ECU 21 via the wire harness 150.

The junction box 22 may be configured to supply the DC power, which has been stepped down by the DC-to-DC converter, to components other than the battery ECU 21. For example, the junction box 22 may be configured to supply the DC power, which has been stepped down by the DC-to-DC converter, to auxiliary devices (e.g., an electric power steering system and an electric oil pump). The electric power steering system is a mechanism that assists the driver's steering operation. The electric oil pump is a mechanism that draws in lubricating oil and use it for cooling and lubricating a motor.

The junction box 22 includes the cutoff relay 25. The cutoff relay 25 is a relay circuit that switches between a connected state, in which electric power supplied from the battery 15 via the wire harness 110 is allowed to flow, and a cutoff state, in which the electric power is blocked. When the cutoff relay 25 is in the cutoff state, the battery 15 is electrically disconnected from the junction box 22. As a result, the devices connected to the junction box 22 by the wire harnesses are also electrically disconnected from the battery 15.

### Drive System of Electric Vehicle 10

The first motor 132 and the second motor 142 serve as power sources to drive the drive wheels. The battery 15 stores electric power that is supplied to the first motor 132 and the second motor 142. That is, the electric vehicle 10 uses the electric power stored in the battery 15 to drive the drive wheels. The first motor 132 drives the front wheels 11 via first drive shafts 23. Namely, the front wheels 11 are included in the drive wheels. The second motor 142 drives the rear wheel 12 via second drive shafts 24. Namely, the rear wheels 12 are included in the drive wheels.

The first electric power controller 131 supplies electric power to the first motor 132. The first electric power controller 131 includes an inverter that converts the DC power supplied from the battery 15 via the junction box 22 into AC power, which is then supplied to the first motor 132. The second electric power controller 141 supplies electric power to the second motor 142. The second electric power controller 141 includes an inverter that converts the DC power supplied from the battery 15 via the junction box 22 into AC power, which is then supplied to the second motor 142.

Each integrated electromechanical unit may include, as the electric power controller, devices other than the inverter. For example, the integrated electromechanical unit may include a DC-to-DC converter that boosts the DC power supplied from the battery 15 via the junction box 22, in addition to the inverter. In this case, the inverter provided as part of the electric power controller converts, into AC power, the DC power supplied from the DC-to-DC converter and supplies it to the motor. The integrated electromechanical unit may include, as the electric power controller, an ECU that controls the electric power supplied to the motor.

### Configuration of Manual Gear Shift Simulator

As shown in Fig. 1, the electric vehicle 10 includes a manual gear shift simulator that includes the shift lever 26 and the shift ECU 27. The manual gear shift simulator simulates an operational feel of a vehicle equipped with a manual transmission. The shift lever 26 is operated by the driver to select a shift position. The shift ECU 27 stores multiple torque characteristics. The shift ECU 27 controls the first motor 132 and the second motor 142 based on the torque characteristics that correspond to the shift position selected by the driver using the shift lever 26. The torque characteristics will be described later.

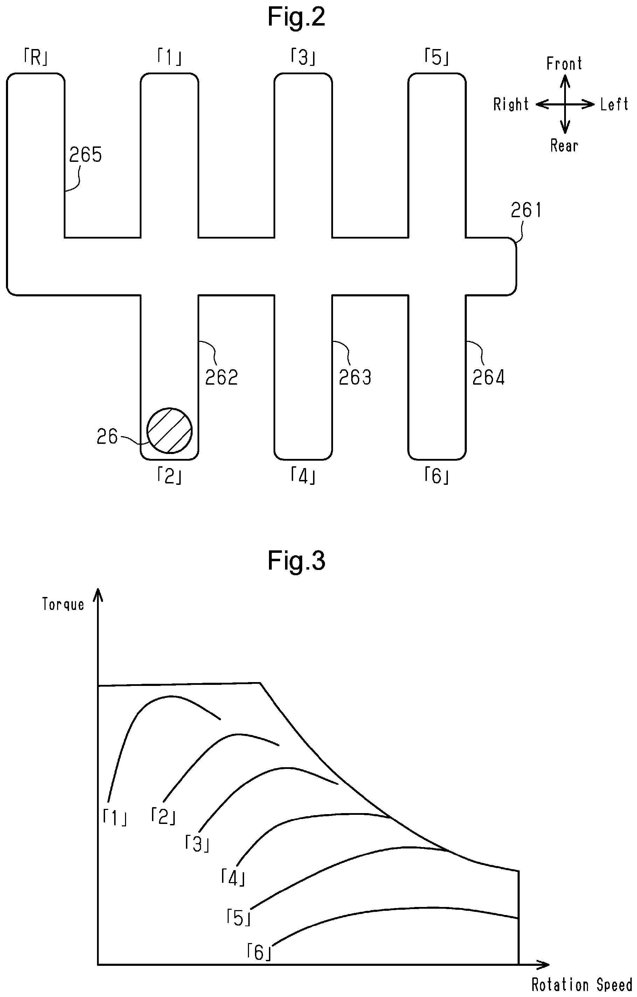

As shown in Fig. 2, in the same manner as the shift lever in the vehicle equipped with the manual transmission, the shift lever 26 is configured to move between a selection path 261 that extends in the left-right direction of the electric vehicle 10 and multiple shift paths 262, 263, and 264 that are orthogonal to the selection path 261. The shift paths 262, 263, and 264 are arranged in the front-rear direction. The shift path 265 extends frontward of the selection path 261.

The shift lever 26 is configured to allow the driver to manually select multiple shift positions that simulate gear positions in the vehicle equipped with the manual transmission. The driver can select the shift position assigned to the end of each shift path by moving the shift lever 26 to that end.

The driver can select the shift position "1" by moving the shift lever 26 to the front end of the shift path 262. The driver can select the shift position "2" by moving the shift lever 26 to the rear end of the shift path 262. The driver can select the shift position "3" by moving the shift lever 26 to the front end of the shift path 263. The driver can select the shift position "4" by moving the shift lever 26 to the rear end of the shift path 263. The driver can select the shift position "5" by moving the shift lever 26 to the front end of the shift path 264. The driver can select the shift position "6" by moving the shift lever 26 to the rear end of the shift path 264. The driver can select the shift position "R" by moving the shift lever 26 to the front end of the shift path 265. The driver can move the shift lever 26 to the selection path 261 to select, as the shift position, the neutral state in a manual transmission vehicle. When the driver selects the shift position "R," the electric vehicle 10 moves in reverse in response to the driver's accelerator operation.

Control on First Motor 132 and Second Motor 142 by Manual Gear Shift Simulator

Fig. 3 is a diagram illustrating the torque characteristics stored in the shift ECU 27. Each torque characteristic represents the relationship between the torque generated by the motor and the rotation speed of the motor. The shift ECU 27 stores multiple torque characteristics in which the relationship between the motor's rotation speed and torque changes in a stepwise manner. The torque characteristics stored in the shift ECU 27 simulate drive force characteristics of the manual transmission vehicle.

The torque characteristics stored in the shift ECU 27 respectively correspond to the shift positions selected by the shift lever 26. The shift ECU 27 controls the first motor 132 based on the torque characteristics that correspond to the shift position selected by the driver. That is, the shift ECU 27 determines the torque output by the first motor 132 based on the torque characteristics that correspond to the shift position selected by the driver and the rotation speed of the first motor 132. Then, the shift ECU 27 controls the first motor 132 via the first electric power controller 131 such that the first motor 132 outputs that torque. The shift ECU 27 controls the second motor 142 based on the torque characteristics that correspond to the shift position selected by the driver. That is, the shift ECU 27 determines the torque output by the second motor 142 based on the torque characteristics that correspond to the shift position selected by the driver and the rotation speed of the second motor 142. Then, the shift ECU 27 controls the second motor 142 via the second electric power controller 141 such that the second motor 142 outputs that torque.

When the driver selects the shift position "1" using the shift lever 26, the shift ECU 27 controls the first motor 132 via the first electric power controller 131 such that the rotation speed and the torque output by the first motor 132 conform to the torque characteristic "1." When the driver selects the shift position "1" using the shift lever 26, the shift ECU 27 controls the second motor 142 via the second electric power controller 141 such that the rotation speed and the torque output by the second motor 142 conform to the torque characteristic "1."

When the driver selects the shift position "2" using the shift lever 26, the shift ECU 27 controls the first motor 132 via the first electric power controller 131 such that the rotation speed and the torque output by the first motor 132 conform to the torque characteristic "2." When the driver selects the shift position "2" using the shift lever 26, the shift ECU 27 controls the second motor 142 via the second electric power controller 141 such that the rotation speed and the torque output by the second motor 142 conform to the torque characteristic "2."

When the driver selects the shift position "3" using the shift lever 26, the shift ECU 27 controls the first motor 132 via the first electric power controller 131 such that the rotation speed and the torque output by the first motor 132 conform to the torque characteristic "3." When the driver selects the shift position "3" using the shift lever 26, the shift ECU 27 controls the second motor 142 via the second electric power controller 141 such that the rotation speed and the torque output by the second motor 142 conform to the torque characteristic "3."

When the driver selects the shift position "4" using the shift lever 26, the shift ECU 27 controls the first motor 132 via the first electric power controller 131 such that the rotation speed and the torque output by the first motor 132 conform to the torque characteristic "4." When the driver selects the shift position "4" using the shift lever 26, the shift ECU 27 controls the second motor 142 via the second electric power controller 141 such that the rotation speed and the torque output by the second motor 142 conform to the torque characteristic "4."

When the driver selects the shift position "5" using the shift lever 26, the shift ECU 27 controls the first motor 132 via the first electric power controller 131 such that the rotation speed and the torque output by the first motor 132 conform to the torque characteristic "5." When the driver selects the shift position "5" using the shift lever 26, the shift ECU 27 controls the second motor 142 via the second electric power controller 141 such that the rotation speed and the torque output by the second motor 142 conform to the torque characteristic "5."

When the driver selects the shift position "6" using the shift lever 26, the shift ECU 27 controls the first motor 132 via the first electric power controller 131 such that the rotation speed and the torque output by the first motor 132 conform to the torque characteristic "6." When the driver selects the shift position "6" using the shift lever 26, the shift ECU 27 controls the second motor 142 via the second electric power controller 141 such that the rotation speed and the torque output by the second motor 142 conform to the torque characteristic "6."

### Parking Brake System

As shown in Fig. 1, the electric vehicle 10 includes a parking brake system that includes the electric parking brake 31, the hand brake lever 28, and the switch ECU 29. The electric parking brake 31 actuates to brake the rear wheels 12. The hand brake lever 28 is a switch operated by the driver. The switch ECU 29 controls the electric parking brake 31 based on the position of the hand brake lever 28. When the hand brake lever 28 is raised, the switch ECU 29 actuates the electric parking brake 31. As a result, the rear wheels 12 are braked by the electric parking brake 31. When the hand brake lever 28 is in a lower position, the switch ECU 29 does not actuate the electric parking brake 31.

### Internal Structure of Electric Vehicle 10

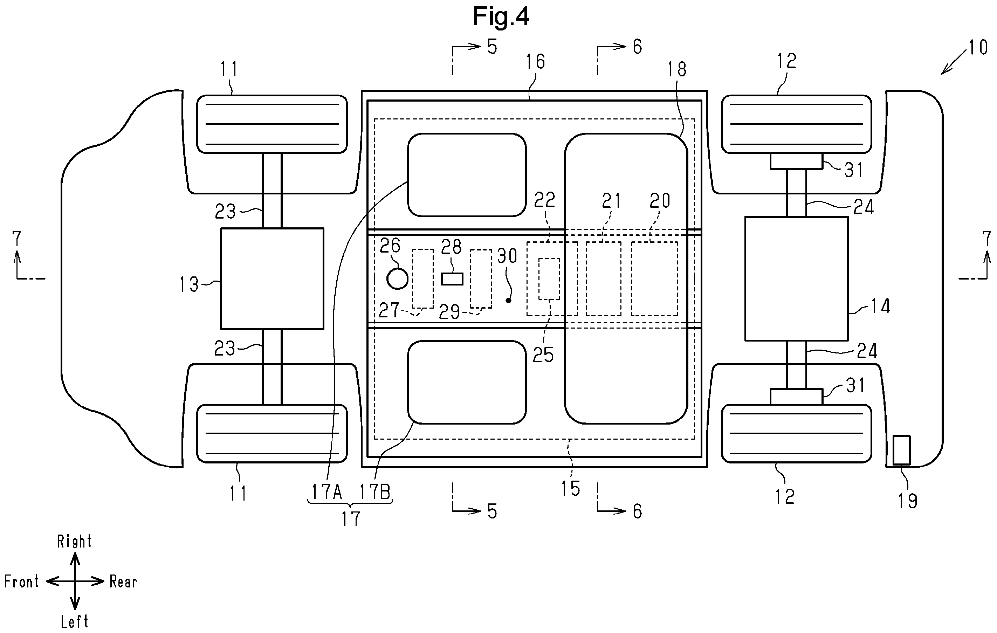

Fig. 4 schematically illustrates the arrangement of the devices in a top view of the electric vehicle 10. The battery 15, indicated by the broken line, is located below the floor 16. The first integrated electromechanical unit 13 is located frontward of the battery 15. The second integrated electromechanical unit 14 is located rearward of the battery 15. The battery 15 is located between the first integrated electromechanical unit 13 and the second integrated electromechanical unit 14. The battery 15 is located between the front wheels 11 and the rear wheels 12.

In the electric vehicle 10, first-row seats 17 and a second-row seat 18 are arranged above the floor 16. In the electric vehicle 10, the second-row seat 18 is located rearward of the first-row seats 17. In the electric vehicle 10, the first-row seats 17 include two seats: namely, a seat 17A on the right side and a seat 17B on the left side. The seats 17A and 17B are laterally arranged side by side. A center tunnel 30, which will be described later, is arranged between the seats 17A and 17B. The center tunnel 30 extends from a front portion to a rear portion of the floor 16. The seat 17A is the driver's seat, where the driver is seated. In the electric vehicle 10, the seat 17B may be the driver's seat. The charging port 19 is located rearward of the battery 15 on the left side of the electric vehicle 10.

The vehicle on-board charger 20, the battery ECU 21, and the junction box 22, which are the battery-related devices shown by the broken lines, are located above the battery 15 and inside the center tunnel 30. The vehicle on-board charger 20 is located rearward of the middle of the center tunnel 30 in the front-rear direction. The junction box 22 includes the cutoff relay 25.

The shift ECU 27 and the switch ECU 29, which are shown by the broken lines, are located above the battery 15 and inside the center tunnel 30. The vehicle on-board charger 20, the battery ECU 21, the junction box 22, the shift ECU 27, and the switch ECU 29 are arranged from the front in the order of the shift ECU 27, the switch ECU 29, the junction box 22, the battery ECU 21, and the vehicle on-board charger 20.

The shift lever 26 and the hand brake lever 28 are located on the center tunnel 30. The hand brake lever 28 is located rearward of the shift lever 26. The shift lever 26 and the hand brake lever 28 are located between the seats 17A and 17B, which are the first-row seats 17.

### Internal Structure around First-Row Seats 17

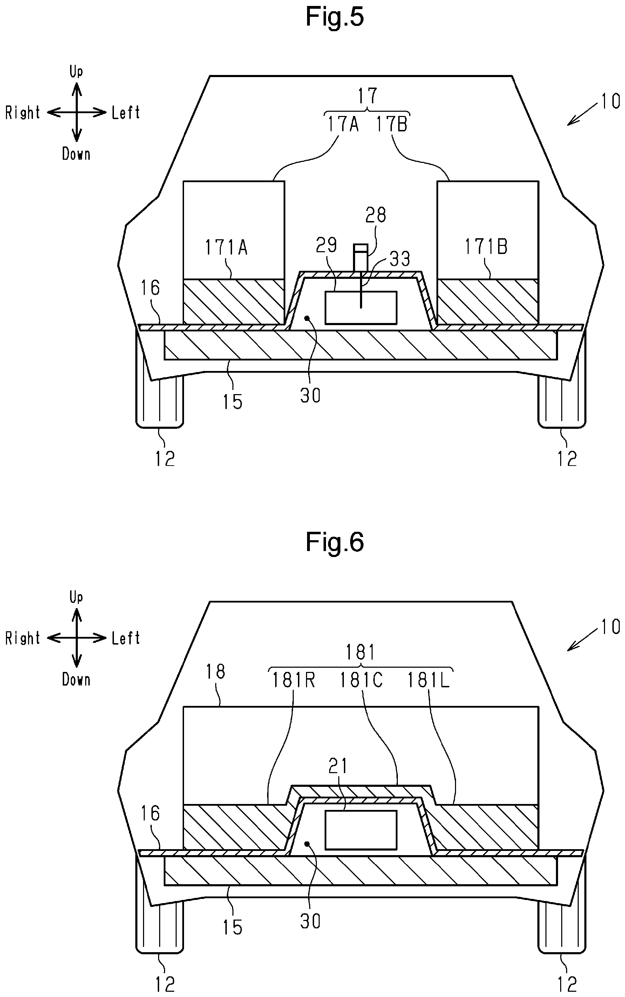

Fig. 5 is a schematic cross-sectional view of the electric vehicle 10 shown in Fig. 4, taken along line 5-5 in Fig. 4. The positional relationship between the first-row seats 17, the center tunnel 30, the hand brake lever 28, and the switch ECU 29 will now be described with reference to Fig. 5. As shown in Fig. 5, the floor 16 is bent upward in a convex shape. As a result, in the electric vehicle 10, the center tunnel 30 is located below the floor 16 and above the battery 15. The first-row seats 17 include the seat 17A, which is located on the right side of the center tunnel 30, and the seat 17B, which is located on the left side of the center tunnel 30. The seats 17A and 17B are independent from each other. The seat 17A includes a seat surface 171A. The seat 17B includes a seat surface 171B.

The hand brake lever 28 is located on the center tunnel 30, which is between the seats 17A and 17B. The switch ECU 29 is located inside the center tunnel 30, which is between the seats 17A and 17B. As viewed from above, the switch ECU 29 overlaps the battery 15. No battery-related device is arranged below the seat surfaces 171A and 171B.

### Internal Structure around Second-Row Seat 18

Fig. 6 is a schematic cross-sectional view of the electric vehicle 10 shown in Fig. 4, taken along line 6-6 in Fig. 4. The positional relationship between the second-row seat 18, the center tunnel 30, and the battery ECU 21 will now be described with reference to Fig. 6. As shown in Fig. 6, the floor 16 is bent upward in a convex shape. As a result, in the electric vehicle 10, the center tunnel 30 is located below the floor 16 and above the battery 15. The second-row seat 18 includes seat surfaces 181 that are bent upward in a convex shape in conformance with the bending of the floor 16. The seat surfaces 181 include a seat surface 181R, which is located on the right side of the center tunnel 30, a seat surface 181C, which is located above the center tunnel 30, and a seat surface 181L, which is located on the left side of the center tunnel 30. The seat surfaces 181R, 181C, and 181L are the seat surfaces 181 that are continuous with each other. The seat surface 181R is the seat surface 181 on the right side of the second-row seat 18. The seat surface 181L is the seat surface 181 on the left side of the second-row seat 18. The seat surfaces 181R and 181L are located below the seat surface 181C.

The battery ECU 21 is located inside the center tunnel 30, which is located below the second-row seat 18 and above the battery 15. As viewed from above, the battery ECU 21 overlaps the battery 15. The battery ECU 21 is located below the seat surface 181C. No battery-related device is arranged below the seat surfaces 181R and 181L.

### Internal Structure of Electric Vehicle 10 as Seen from the Left Side

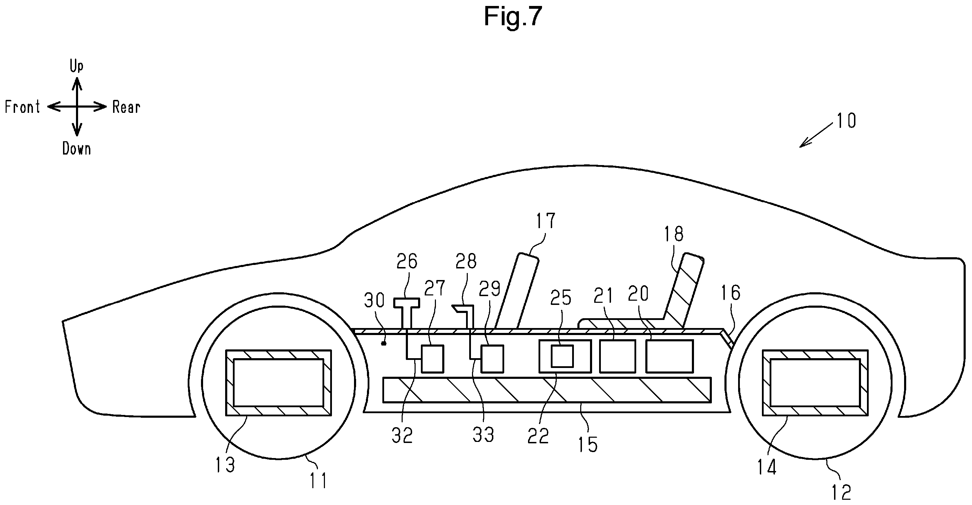

Fig. 7 is a schematic cross-sectional view of the electric vehicle 10 shown in Fig. 4, taken along line 7-7 in Fig. 4. Fig. 7 schematically illustrates the internal structure of the electric vehicle 10 as seen from the left side. As shown in Fig. 7, the center tunnel 30 extends in the front-rear direction of the electric vehicle 10.

The vehicle on-board charger 20, the battery ECU 21, and the junction box 22, which are battery-related devices, are located above the battery 15 and inside the center tunnel 30. The vehicle on-board charger 20 is located rearward of the middle of the center tunnel 30 in the front-rear direction. The junction box 22 includes the cutoff relay 25. The shift ECU 27 and the switch ECU 29 are located above the battery 15 and inside the center tunnel 30. The vehicle on-board charger 20, the battery ECU 21, the junction box 22, the shift ECU 27, and the switch ECU 29 are arranged from the front in the order of the shift ECU 27, the switch ECU 29, the junction box 22, the battery ECU 21, and the vehicle on-board charger 20.

The shift lever 26 and the hand brake lever 28 are located on the center tunnel 30. The hand brake lever 28 is located rearward of the shift lever 26.

### Operation of the Present Embodiment

In the electric vehicle 10, the vehicle on-board charger 20, the battery ECU 21, and the junction box 22, which are battery-related devices, are located inside the center tunnel 30. As a result, compared to a vehicle in which the center tunnel 30 is not arranged and battery-related devices are arranged below the seat surface 171A of the seat 17A, the seat surface 171B of the seat 17B, and the left and right seat surfaces 181L and 181R of the second-row seat 18, the positions of the seat surfaces 171A, 171B, and 181 in the electric vehicle 10 are lower. Specifically, in the electric vehicle 10, the positions of the seat surfaces 171A and 171B are lower, and the positions of the seat surfaces 181R and 181L of the second-row seat 18, where the occupant is seated, are lower. This allows the seating position of the occupant to be lower, and thus the entire height of the electric vehicle 10 becomes lower.

### Advantages of the Present Embodiment

(1) The electric vehicle 10 has a low-profile appearance.
(2) The electric vehicle 10 includes the battery ECU 21, which controls the charging and discharging of the battery 15, as a battery-related device. The battery ECU 21 is located inside the center tunnel 30. That is, the battery ECU 21 is located below the floor 16 and above the battery 15. Compared to a vehicle in which the battery ECU 21 is arranged outside the center tunnel 30, the electric vehicle 10 has a shorter distance between the battery ECU 21 and the battery 15. Thus, the electric vehicle 10 requires only a relatively short wire harness 120 connecting the battery 15 to the battery ECU 21. The shorter the wire harness 120 is, the less its weight. That is, the weight of the electric vehicle 10 is reduced. Further, the shorter the wire harness 120 is, the lower the power loss becomes. Thus, the electric vehicle 10 has a lower power loss in the wire harness 120, which connects the battery 15 to the battery ECU 21.
(3) The electric vehicle 10 includes the junction box 22, which distributes the electric power supplied from the battery 15, as a battery-related device. The junction box 22 is located inside the center tunnel 30. That is, the junction box 22 is located below the floor 16 and above the battery 15. Compared to a configuration in which the junction box 22 is arranged outside the center tunnel 30, the electric vehicle 10 has a shorter distance between the junction box 22 and the battery 15. Thus, the electric vehicle 10 requires only a relatively short wire harness 110 connecting the battery 15 to the junction box 22. The shorter the wire harness 110 is, the less its weight. That is, the weight of the electric vehicle 10 is reduced. Further, the shorter the wire harness 110 is, the lower the power loss becomes. Thus, the electric vehicle 10 has a lower power loss in the wire harness 110, which connects the battery 15 to the junction box 22.
(4) The electric vehicle 10 includes the charging port 19, into which a charging plug is inserted from outside the electric vehicle 10. The charging port 19 is connected to the vehicle on-board charger 20 by the wire harness 100. The charging port 19 is located rearward of the battery 15 on the left side of the electric vehicle 10. The vehicle on-board charger 20 is located inside the center tunnel 30 and rearward of the middle of the center tunnel 30 in the front-rear direction. Compared to a vehicle in which the charging port 19 is arranged frontward of the battery 15, the electric vehicle 10 has a shorter distance between the vehicle on-board charger 20 and the charging port 19. Thus, the electric vehicle 10 requires only a relatively short wire harness 100 connecting the vehicle on-board charger 20 to the charging port 19. The shorter the wire harness 100 is, the less its weight. That is, the weight of the electric vehicle 10 is reduced. Further, the shorter the wire harness 100 is, the lower the power loss becomes. Thus, the electric vehicle 10 has a lower power loss in the wire harness 100, which connects the vehicle on-board charger 20 to the charging port 19.
(5) The junction box 22 includes the cutoff relay 25, which interrupts the electric power supplied from the battery 15. The wire harness 110, which connects the junction box 22 to the battery 15, may receive a relatively high voltage. The junction box 22 is located below the floor 16 and above the battery 15. Thus, compared to a vehicle in which the cutoff relay 25 is arranged outside the center tunnel 30, the electric vehicle 10 allows the cutoff relay 25 to interrupt the high-voltage power supplied from the battery 15 at a position closer to the battery 15. This allows the electric vehicle 10 to achieve higher safety.
(6) The electric vehicle 10 includes the manual gear shift simulator, which includes the shift lever 26 and the shift ECU 27. The manual gear shift simulator simulates an operational feel of a vehicle equipped with a manual transmission. The shift lever 26 is a device operated by the driver to select a shift position. The shift ECU 27 controls the first motor 132 and the second motor 142 based on the torque characteristics that correspond to the shift position selected by the shift lever 26. In the electric vehicle 10, the shift ECU 27 is located inside the center tunnel 30. Accordingly, compared to a vehicle in which the shift ECU 27 is arranged below the seat surface 171A of the seat 17A, the seat surface 171A of the electric vehicle 10 is located at a lower position. This allows the seating position of the occupant to be lower and thus causes the height of the electric vehicle 10 to be lower. Further, since the electric vehicle 10 includes the manual gear shift simulator, the driver of the electric vehicle 10 is allowed to control the electric vehicle 10 with the torque characteristics that correspond to the shift position selected by the driver. Thus, the electric vehicle 10 provides the driver with a sense of enjoyment associated with operating a manual transmission device. Thus, the electric vehicle 10 provides the driver with a sense of enjoyment associated with operating a manual transmission device while providing a low-profile appearance.
(7) The electric vehicle 10 includes the parking brake system including the electric parking brake 31, the hand brake lever 28, and the switch ECU 29. The electric parking brake 31 actuates to brake the rear wheels 12. The hand brake lever 28 is a switch operated by the driver. The switch ECU 29 controls the electric parking brake 31 based on the position of the hand brake lever 28. The hand brake lever 28 is located between the first-row seats 17, namely, between the seats 17A and 17B, and on the center tunnel 30. The switch ECU 29 is located inside the center tunnel 30. In the electric vehicle 10, the switch ECU 29 of the parking brake system is located inside the center tunnel 30. Accordingly, in the electric vehicle 10, compared to a vehicle in which the switch ECU 29 is arranged below the seat surface 171B of the seat 17B, the seat surface 171B is located at a lower position. This allows the seating position of the occupant to be lower and thus causes the height of the electric vehicle 10 to be lower. The electric vehicle 10 includes the parking brake system and thus has a low-profile appearance.
(8) The electric vehicle 10 includes the hand brake lever 28 as a switch that sends a signal to the switch ECU 29. The electric vehicle 10 includes the center tunnel 30. The electric vehicle 10 includes the shift lever 26 and the hand brake lever 28, which are located on the center tunnel 30 and between the first-row seats 17 (the seats 17A and 17B). The hand brake lever 28 is located rearward of the shift lever 26. The seat 17A of the first-row seat 17 is the driver's seat. Accordingly, despite being an electric vehicle, the electric vehicle 10 achieves a driver's seat layout similar to that of a conventional sports car that includes the center tunnel 30, the shift lever 26, and the hand brake lever 28. Thus, the electric vehicle 10 provides the driver with a sense of being seated in a traditional sports car.

### Modifications

The present embodiment may be modified as follows. The present embodiment and the following modifications can be combined if the combined modifications remain technically consistent with each other.

When the vehicle on-board charger 20 is located inside the center tunnel 30 and rearward of the middle of the center tunnel 30 in the front-rear direction, the charging port 19 may be located rearward of the battery 15 on the right side of the electric vehicle 10. Even in this case, the distance between the vehicle on-board charger 20 and the charging port 19 is relatively short. Thus, the electric vehicle 10 requires only a relatively short wire harness 100 connecting the vehicle on-board charger 20 to the charging port 19.

If the battery ECU 21 is located inside the center tunnel 30, the battery 15 may be connected to the battery ECU 21 using a method other than the wire harness 120. For example, the battery 15 may be connected to the battery ECU 21 by a busbar. If the junction box 22 is located inside the center tunnel 30, the battery 15 may be connected to the junction box 22 using a method other than the wire harness 110. For example, the battery 15 may be connected to the junction box 22 by a busbar.

In the electric vehicle 10, the junction box 22 does not have to include the cutoff relay 25. For example, the battery 15 may include the cutoff relay 25. Even in this case, the electric vehicle 10 interrupts the high-voltage power supplied from the battery 15 at a location relatively close to the battery 15 using the cutoff relay 25.

If the shift ECU 27 is located inside the center tunnel 30, the shift ECU 27 may be located rearward of the battery-related devices in the electric vehicle 10.

If the switch ECU 29 is located inside the center tunnel 30, the switch ECU 29 may be located rearward of the battery-related devices in the electric vehicle 10.

If the battery-related devices are located inside the center tunnel 30, the charging port 19 may be located frontward of the battery 15 in the electric vehicle 10. Even in this configuration, compared to a vehicle in which the center tunnel 30 is not arranged and battery-related components are arranged below the seat surface 171A of the seat 17A, the seat surface 171B of the seat 17B, and the left and right seat surfaces 181L and 181R of the second-row seat 18, the positions of the seat surfaces 171A, 171B, and 181 in the electric vehicle 10 are lower. Specifically, in the electric vehicle 10, the positions of the seat surfaces 171A and 171B are lower, and the positions of the seat surfaces 181R and 181L of the second-row seat 18, where the occupant is seated, are lower. This allows the seating position of the occupant to be lower and thus causes the height of the electric vehicle 10 to be lower.

The electric vehicle 10 may be configured to use a DC power supply as an external charging device that charges the battery 15. For example, the charging port 19 may be used for fast charging with a high-voltage DC power supply (e.g., 50 kW). In that case, the charging port 19 is electrically connected not only to the vehicle on-board charger 20 but also to the junction box 22. For example, the charging port 19 and the junction box 22 may be electrically connected to each other by a wire harness. As a result, the DC power received from the DC power supply connected to the charging port 19 is supplied to the battery 15 via the junction box 22.

In the electric vehicle 10, the hand brake lever 28 may be located frontward of the shift lever 26. In the electric vehicle 10, the hand brake lever 28 may be located at the right or left side of the shift lever 26. In the electric vehicle 10, the shift lever 26 and the hand brake lever 28 may be disposed in accordance with the arrangement of a shift lever and a hand brake lever in the driver's seat simulating those of a traditional sports car.

The switch of the parking brake system of the electric vehicle 10 is not limited to the hand brake lever 28. For example, the electric vehicle 10 may include a push-button switch as the switch of the parking brake system.

If the battery-related devices are located inside the center tunnel 30, the electric vehicle 10 does not have to include the parking brake system including the electric parking brake 31, the hand brake lever 28, which is a switch, and the switch ECU 29.

If the battery-related devices are located inside the center tunnel 30, the electric vehicle 10 does not need to include the manual transmission simulation device including the shift lever 26 and the shift ECU 27.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric vehicle (10) configured to drive a drive wheel (11, 12) using electric power stored in a battery (15), the electric vehicle (10) comprising:
a first motor (132) and a second motor (142) configured to serve as a power source for driving the drive wheel (11, 12);
a battery (15) configured to store electric power supplied to the first motor (132) and the second motor (142);
battery-related devices (20, 21, 22);
a first integrated electromechanical unit (13) including the first motor (132) and a first electric power controller (131) configured to supply power to the first motor (132); and
a second integrated electromechanical unit (14) including the second motor (142) and a second electric power controller (141) configured to supply power to the second motor (142), wherein
the battery (15) is located below the floor (16) and between the front wheel (11) and the rear wheel (12),
the first integrated electromechanical unit (13) is located frontward of the battery (15),
the second integrated electromechanical unit (14) is located rearward of the battery (15),
a first-row seat (17) and a second-row seat (18) are arranged on the floor (16), the second-row seat (18) being located rearward of the first-row seat (17),
the first-row seat (17) includes two seats (17A, 17B) that are laterally arranged side by side,
a center tunnel (30) is arranged between the two seats (17A, 17B),
the center tunnel (30) is located below the floor (16) and above the battery (15),
the center tunnel (30) extends from a front portion to a rear portion of the floor (16), and
each of the battery-related devices (20, 21, 22) is located inside the center tunnel (30).

2. The electric vehicle (10) according to claim 1, comprising a vehicle on-board charger (20) configured to charge the battery (15) with electric power from outside the electric vehicle (10), as the battery-related device (20, 21, 22).

3. The electric vehicle (10) according to claim 1 or 2, comprising a battery ECU (21) configured to control charging and discharging of the battery (15), as the battery-related device (20, 21, 22).

4. The electric vehicle (10) according to any one of claims 1 to 3, comprising a junction box (22) configured to distribute electric power supplied from the battery (15), as the battery-related device (20, 21, 22).

5. The electric vehicle (10) according to claim 2, further comprising a charging port (19) into which a charging plug is configured to be inserted from outside the electric vehicle (10), wherein
the charging port (19) is connected to the vehicle on-board charger (20) by a wire harness (100),
the charging port (19) is located rearward of the battery (15) and arranged on a side of the electric vehicle (10), and
the vehicle on-board charger (20) is located inside the center tunnel (30) and rearward of a middle of the center tunnel (30) in a front-rear direction.

6. The electric vehicle (10) according to claim 4, wherein
the junction box (22) includes a cutoff relay (25) configured to interrupt the electric power supplied from the battery (15).

7. The electric vehicle (10) according to any one of claims 1 to 6, further comprising:
a shift lever (26) to be operated by a driver to select a gear position;
a shift ECU (27) configured to control the first motor (132) and the second motor (142) based on torque characteristics that correspond to the gear position selected by the shift lever (26); and
a manual gear shift simulator configured to simulate an operational feel of a vehicle equipped with a manual transmission, wherein
the shift lever (26) is located between the two seats (17A, 17B) and on the center tunnel (30), and
the shift ECU (27) is located inside the center tunnel (30).

8. The electric vehicle (10) according to any one of claims 1 to 7, further comprising:
a parking brake system that includes an electric parking brake (31) configured to actuate to brake the rear wheel (12), a switch (28) to be operated by a driver, and a switch ECU (29) configured to control the electric parking brake (31) based on a position of the switch (28), wherein
the switch (28) is located between the two seats (17A, 17B) and on the center tunnel (30), and
the switch ECU (29) is located inside the center tunnel (30).

9. The electric vehicle (10) according to claim 8, wherein
the switch (28) is a hand brake lever (28), and
the hand brake lever (28) is located rearward of a shift lever (26), the shift lever (26) being located between the two seats (17A, 17B) and on the center tunnel (30).
